## Europäisches Patentamt

## European Patent Office

## Office européen des brevets

(11) Veröffentlichungsnummer: **0 154 029**
**B1**

(12) # EUROPÄISCHE PATENTSCHRIFT

(45) Veröffentlichungstag der Patentschrift:
29.10.86

(51) Int. Cl.⁴: **B 60 K 31/04**

(21) Anmeldenummer: 84116134.2

(22) Anmeldetag: 21.12.84

(54) Einrichtung und Verfahren zur Regelung der Geschwindigkeit eines Fahrzeugs, insbesondere eines Kraftfahrzeug, mit einem elektronischen Regler.

(30) Priorität: 17.02.84 DE 3405707

(43) Veröffentlichungstag der Anmeldung:
11.09.85 Patentblatt 85/37

(45) Bekanntmachung des Hinweises auf die Patenterteilung:
29.10.86 Patentblatt 86/44

(84) Benannte Vertragsstaaten:
DE FR GB NL SE

(56) Entgegenhaltungen:
DE - A - 2 754 439
DE - A - 2 754 824
DE - A - 3 010 396
US - A - 4 273 208
US - A - 4 359 125

VDO-Information, Tempostat, VDO Adolf-Schindling
AG, September 1981

(73) Patentinhaber: VDO Adolf Schindling AG,
Gräfstrasse 103, D-6000 Frankfurt/Main (DE)

(72) Erfinder: Collonia, Harald, Dipl. -Ing., Weizenacker 13,
D-6251 Beselich/Schupach (DE)

(74) Vertreter: Klein, Thomas, Dipl.-Ing. (FH), Sodener
Strasse 9 Postfach 6140, D-6231 Schwalbach a. Ts. (DE)

ACTORUM AG

## Beschreibung

Die Erfindung betrifft eine Einrichtung und ein Verfahren zur Regelung der Geschwindigkeit eines Fahrzeugs, insbesondere eines Kraftfahrzeugs mit einem elektronischen Regler nach dem Oberbegriff des Anspruchs 1.

Bei einer derartigen bekannten Einrichtung (VDO Information, Tempostat, VDO Adolf Schindling AG, September 1981) wird der Regler bzw. der zu ihm gehörende Speicher durch Betätigen der Taste zum Setzen auf das Geschwindigkeits-Sollwertsignal eingestellt, welches der Ist-Geschwindigkeit zum Zeitpunkt der Tastenbetätigung entspricht. Die Bedienung des geschwindigkeitsgeregelten Fahrzeugs kann dadurch weiter erleichtet werden, dass das Fahrzeug durch Betätigen einer Taste zum Setzen und Beschleunigen solange beschleunigt wird, bis die Taste losgelassen wird, wobei zugleich die erreichte Geschwindigkeit als Geschwindigkeits-Sollwertsignal in den einen Speicher eingespeist wird. Durch eine weitere Taste zum Setzen und Verzögern kann analog dazu das Fahrzeug verzögert werden, solange diese Taste betätigt ist, und beim Loslassen dieser Taste wird ein Geschwindigkeits-Sollwertsignal in den gleichen Speicher eingespeichert, welches der zu diesem Zeitpunkt durch Verzögern erreichten Geschwindigkeit entspricht. Nach dem Setzen des Reglers bzw. Speichers fährt das Fahrzeug mit der geregelten Geschwindigkeit bis entweder an dem Bediengerät eine Taste zum Ausschalten der Regelung betätigt wird, oder das Fahrzeug durch die Fahrzeugbremse abgebremst wird, was ebenfalls als elektrisches Signal in den Regler gemeldet wird. Anschliessend kann das Fahrzeug wieder selbsttätig auf eine gewünschte Geschwindigkeit gleich dem früher gesetzten Geschwindigkeits-Sollwertsignal beschleunigt werden, indem einfach die Wiederaufnahmetaste betätigt wird. Dadurch wird das zuvor gespeicherte Geschwindigkeits-Sollwertsignal für die Regelung aktiviert. — Es besteht also bei bekannten Einrichtungen zur Regelung der Geschwindigkeit eines Fahrzeugs nur die Möglichkeit, den Ist-Wert der Geschwindigkeit selbsttätig auf den einen gesetzten Soll-Wert zu führen, falls die Geschwindigkeit nicht in konventioneller Weise ständig durch den Fahrer — Fahrpedalbetätigung und Bremsbetätigung — willkürlich bestimmt wird. In der Fahrpraxis kann es jedoch vorkommen, dass der Fahrer zunächst auf freier Strecke mit einer bestimmten relativ hohen geregelten Reisegeschwindigkeit fahren möchte. Wenn im Zuge der Strecke ein Abschnitt mit Geschwindigkeitsbegrenzung auftritt, wie z.B. in den Aus- und Einfahrtbereichen von Autobahnen, Gefällstrecken oder Baustellen, so muss die geregelte Geschwindigkeit ausgeschaltet und das Fahrzeug abgebremst werden. Der genannte Streckenabschnitt wird dann mit der zulässigen geringeren Geschwindigkeit durchfahren. Dies kann dadurch erfolgen, dass der Fahrer durch Betätigung des Gaspedals diese Geschwindigkeit unter Beobachtung des Tachometers einhält, was jedoch bei längeren Streckenabschnitten unkomfortabel ist. Allerdings bleibt bei dieser Verfahrensweise der gespeicherte Geschwindigkeits-Sollwert der Reisegeschwindigkeit erhalten, so dass die Reisegeschwindigkeit durch Betätigung der Wiederaufnahmetaste erreicht werden kann. Wenn das auf längeren Streckenabschnitten mit Geschwindigkeitsbegrenzung unkomfortable Einhalten der reduzierten Geschwindigkeit durch Beobachtung des Tachometers und entsprechende Fahrpedalbetätigung vermieden werden soll, kann der Speicher in dem Regler auf diese reduzierte Geschwindigkeit als Geschwindigkeits-Sollwert gesetzt werden. Dabei geht aber der Geschwindigkeits-Sollwert für die Reisegeschwindigkeit verloren. Daher muss in einem solchen Falle nach dem Ende des Streckenabschnitts mit gleicher Geschwindigkeitsbegrenzung der Regler erneut auf das Geschwindigkeits-Sollwertsignal entsprechend der Reisegeschwindigkeit eingestellt werden. Dieser Setzvorgang ist verhältnismässig unkomfortabel, da der Tachometer bis zum Ende des Setzvorgangs beobachtet werden muss, bis das Fahrzeug auf den gewünschten Wert beschleunigt ist. Ausserdem kann dadurch der Fahrer von dem übrigen Verkehrsgeschehen abgelenkt werden.

Der vorliegenden Erfindung liegt daher die Aufgabe zugrunde, eine Einrichtung zur Regelung der Geschwindigkeit eines Fahrzeugs, insbesondere eines Kraftfahrzeugs, mit einem elektronischen Regler so weiterzubilden, dass nicht nur die Reisegeschwindigkeit geregelt wird, sondern dass ausserdem eine zweite Geschwindigkeit — in der Regel eine niedrigere Geschwindigkeit bei Geschwindigkeitsbegrenzung — ohne zeitraubende Setzvorgänge selbsttätig eingeregelt werden kann.

Diese Aufgabe wird durch die im Anspruch 1 angegebene Erfindung gelöst.

Erfindungsgemäss kann nicht nur ein erstes Geschwindigkeits-Sollwertsignal entsprechend der Reisegeschwindigkeit gespeichert und für die selbsttätige Regelung der Fahrzeuggeschwindigkeit aktiviert werden, sondern es kann darüber hinaus ein zweites Geschwindigkeits-Sollwertsignal ohne Zerstörung des ersten Geschwindigkeits-Sollwertsignals in dem Regler gesetzt und aktiviert werden. Dadurch ist es insbesondere möglich, in bequemer und sicherheitsfördernder Weise am Ende einer Strecke mit Geschwindigkeitsbegrenzung, die selbsttätig geregelt mit dem begrenzten Geschwindigkeitswert durchfahren wurde — zweiter Geschwindigkeits-Sollwert — durch Betätigung der Wiederaufnahmetaste auf den ersten Geschwindigkeits-Sollwert zurückzuschalten, der das Fahrzeug wieder auf die Reisegeschwindigkeit beschleunigen lässt, um diese Geschwindigkeit konstant zu halten. Die hierzu vorgesehenen Mittel bestehen nicht nur in einem zweiten Speicher, sondern in der Anordnung des ersten und zweiten Speichers in einem Stapel und dessen Steuerung durch die Steueranordnung.

Durch die in Anspruch 2 angegebene Struktur der Steueranordnung kann in dem ersten Speicher mit geringem Schaltungsaufwand jeweils einer der beiden Geschwindigkeits-Sollwerte neu gesetzt werden. Dabei wird der Geschwindigkeits-Sollwert, der in dem zweiten Speicher enthalten ist, nicht überschrieben. Wenn von dem neu gesetzten Geschwindigkeits-Sollwert auf den früheren Geschwindigkeits-Sollwert übergegangen werden soll, genügt es, in bequemer Weise die Wiederaufnahmetaste zu betätigen. Beispielsweise kann in dem ersten Speicher ein Geschwindigkeits-Sollwert entsprechend einer Geschwindigkeitsbegrenzung am Anfang des entsprechenden Streckenabschnitts eingespeichert werden, während der Geschwindigkeits-Sollwert der Reisegeschwindigkeit in dem zweiten Speicher erhalten bleibt. Nachdem der Streckenabschnitt mit begrenzter geregelter Geschwindigkeit durchfahren ist, kann durch Betätigung der Wiederaufnahmetaste der Geschwindigkeits-Sollwert der Reisegeschwindigkeit wieder in den ersten Speicher übertragen werden.

Bei dem letztgenannten Vorgang wird besonders zweckmässig nach der weiteren Gestaltung der Einrichtung nach Anspruch 3 das Geschwindigkeits-Sollwertsignal dupliziert, zumal es durch Betätigung der Wiederaufnahmetaste von dem zweiten Speicher in den ersten Speicher übertragen wird. Dadurch steht auch anschliessend in dem zweiten Speicher wieder das erste Geschwindigkeits-Sollwertsignal, das beispielsweise der Reisegeschwindigkeit entspricht. Durch nochmaliges Betätigen der Wiederaufnahmetaste kann also die Fahrzeuggeschwindigkeit, beispielsweise die Reisegeschwindigkeit, nicht aus Versehen geändert werden.

Hierzu dient in vorteilhafter Weise auch die weitere Massnahme nach Anspruch 4.

Hierdurch wird vermieden, dass durch Betätigung der Wiederaufnahmetaste, was auch aus Versehen geschehen kann, kein verwertbares Geschwindigkeits-Sollwertsignal aus dem zweiten Speicher in den ersten Speicher der Stapelanordnung übertragen wird.

Nach Anspruch 5 ist gewährleistet, dass bei einer Unterbrechung der selbsttätigen Fahrzeuggeschwindigkeitsregelung mit dem zweiten Geschwindigkeits-Sollwertsignal, in dem die Taste zum Ausschalten der Regelung bedient wird, oder der Fahrzeugbremse gebremst wird und bei späterem Wiedereinschalten der Regelung durch die Wiederaufnahmetaste die Geschwindigkeitsregelung auf das Tempo entsprechend dem zweiten Geschwindigkeits-Sollwertsignal erfolgt. Das erste Geschwindigkeits-Sollwertsignal, welches die Reisegeschwindigkeit bestimmt, wird in diesem Fall nicht wirksam, auch nicht bei wiederholter Betätigung der Wiederaufnahmetaste. Das erste Geschwindigkeits-Sollwertsignal kann erst dann durch Betätigung der Wiederaufnahmetaste für die Regelung wirksam geschaltet werden, nachdem sich die Fahrzeuggeschwindigkeit auf einen Geschwindigkeits-Istwert gleich dem zweiten Geschwindigkeits-Sollwert eingeregelt hat. Dadurch werden nachteilige Auswirkungen einer Fehlbedienung des Bedienungsgeräts und damit der Steueranordnung weitgehend ausgeschlossen.

Ein Ausführungsbeispiel der erfindungsgemässen Einrichtung wird im folgenden anhand einer Zeichnung beschrieben, in der ein Blockschaltbild der Einrichtung vereinfachend dargestellt ist.

Auf einer Leitung 1 liegt ein Geschwindigkeits-Istwertsignal an, welches beispielsweise von einem Reedkontaktgeber oder einem Wechselstromgenerator abgeleitet werden kann. Die Leitung steht mit einer Vergleichsstelle 2 eines Reglers in Verbindung. Zu der Vergleichsstelle führt eine weitere Leitung 3, an der das Geschwindigkeits-Sollwertsignal anliegt. Diese Leitung 3 ist ein Ausgang eines ersten Speichers 4, der zusammen mit einem zweiten Speicher 5 in einem Stapel angeordnet ist. Die Speicher 4 und 5 werden durch eine Steueranordnung 6 über Steuerleitungen 7 und 8 gesteuert. Mit einem unterbrochen dargestellten Leitungszug 9 wird eine Eingangsleitung zu dem ersten Speicher 4 angedeutet, mit der das an der Leitung 1 zu einem bestimmten Zeitpunkt anliegende Geschwindigkeitssignal als Geschwindigkeits-Sollwertsignal in den ersten Speicher eingegeben werden kann.

Die Vergleichsstelle 2 liegt am Eingang eines Reglerverstärkers 10, der in üblicher Weise mit nicht dargestellten Zeitgliedern zur Einstellung des gewünschten Zeitverhaltens des Reglers ausgestattet werden kann. An den Ausgang des Reglerverstärkers 10 ist über eine weitere Vergleichsstelle 11 ein Leistungsverstärker 12 angeschlossen, der ein elektrisches Stellglied 13 zur Verstellung einer Drosselklappe oder einer Einspritzanlage speist. Von einem Stellungsmelder 14 ist eine Rückführungsleitung zu der weiteren Vergleichsstelle 11 in konventioneller Weise zurückgeführt, um eine Linearisierung des Stellverhaltens zu bewirken.

Die Steueranordnung 6 für den ersten und zweiten Speicherstapel ist mittels eines Bediengeräts 16 durch den Fahrer beeinflussbar. Das Bediengerät umfasst mit Tasten oder ähnlichen Betätigungselementen betätigbare Kontakte, im einzelnen: Einen durch eine Austaste 17 betätigbaren Kontakt, einen durch eine Wiederaufnahmetaste 18 betätigbaren Kontakt, einen Kontakt, der durch eine Taste zum Beschleunigen und Setzen 19 betätigbar ist und schliesslich einen Kontakt, der durch eine Taste 20 zum Bremsen und Setzen geschaltet werden kann. Weiterhin steht die Steueranordnung mit einem Bremslichtkontakt 21 in Verbindung, der somit durch Betätigung der Fahrzeugbremse geschaltet wird. Schliesslich ist die sogenannte «Klemme 15» des Kraftfahrzeugs, die nach dem Einschalten der Zündung Spannung führt, über einen Widerstand 22 und einen Kondensator 23 an die Steueranordnung angekoppelt. Dabei dient eine Zenerdiode 24 zur Impuls- bzw. Spannungsbegrenzung.

Es sei angenommen, dass zunächst beide Speicher 4 und 5 gelöscht sind. Nach Einschalten der Zündung gelangt ein Spannungsimpuls über den Kondensator 23 in die Steueranordnung 6, welche die Speicher 4 und 5 so steuert, dass das erste Geschwindigkeits-Sollwertsignal in beide Speicher eingespeichert wird. Dies kann dadurch erfolgen, dass die Taste 19 betätigt wird, wodurch das Fahr-

zeug auf die gewünschte Geschwindigkeit, beispielsweise die Reisegeschwindigkeit, beschleunigt. Dann wird die Taste 19 losgelassen, wodurch die Steueranordnung 6 einen Befehl erzeugt, durch den das Geschwindigkeitssignal auf der Leitung 9 als Geschwindigkeits-Sollwertsignal in beide Speicher 4 und 5 eingespeist wird. Danach wird die Fahrzeuggeschwindigkeit in üblicher Weise durch Differenzbildung zwischen dem Geschwindigkeits-Sollwertsignal auf der Leitung und dem Geschwindigkeits-Istwertsignal auf der Leitung 1 und weitere Signalverarbeitung selbsttätig geregelt, die zu einer Einstellung des elektrischen Stellglieds 13 in der Weise führt, dass der Einfluss von Störgrössen, wie Gefällen, Gegenwind, unterschiedlichen Belastungen auf die Fahrzeuggeschwindigkeit ausgeregelt wird. Diese Regelung kann durch Betätigung der Taste 17 willkürlich oder durch Bremsen – Kontakt 21 – ausgeschaltet werden. Zum erneuten Einschalten der Regelung mit dem ersten Geschwindigkeits-Sollwert ist die Wiederaufnahmetaste 18 zu bedienen.

Soll das Fahrzeug im Verlaufe der Reise während eines Streckenabschnitts abgebremst und mit niedriger Geschwindigkeit weiterfahren, so wird einfach die Taste 20 betätigt, wodurch das Fahrzeug abgebremst wird, bis die Taste losgelassen ist. Durch das Loslassen der Taste 20 wird zugleich das zu diesem Zeitpunkt erreichte Geschwindigkeits-Istwertsignal nun als Geschwindigkeits-Sollwertsignal über die Eingangsleitung 9 in den ersten Speicher 4 gesetzt. Im Zusammenhang damit rückt das erste Geschwindigkeits-Sollwertsignal in den zweiten Speicher. Das Fahrzeug fährt jetzt mit der entsprechend dem zweiten Geschwindigkeits-Sollwert auf einen niedrigeren Wert geregelten Geschwindigkeit. Wenn am Ende des Streckenabschnitts, der mit begrenzter Geschwindigkeit zu durchfahren war, wieder auf Reisegeschwindigkeit beschleunigt werden soll, betätigt der Fahrer einfach die Wiederaufnahmetaste 18. Dadurch rutscht in dem Stapel das erste Geschwindigkeits-Sollwertsignal wieder in den ersten Speicher 4, so dass das erste Geschwindigkeits-Sollwertsignal die Fahrzeuggeschwindigkeit gleich der Reisegeschwindigkeit bestimmt. Gleichzeitig mit der Betätigung der Wiederaufnahmetaste 18 wird der erste Geschwindigkeits-Sollwert dupliziert, der somit auch in dem zweiten Speicher verbleibt und bei nochmaliger Betätigung der Wiederaufnahmetaste zur Regelung zur Verfügung steht.

Wenn bei dem zuvor beschriebenen Vorgang, bei dem das Fahrzeug mit herabgesetzter geregelter Geschwindigkeit gleich dem zweiten Geschwindigkeits-Sollwertsignal fährt, zunächst die Regelung ausgeschaltet und dann durch Betätigen der Wiederaufnahmetaste 18 erneut eingeschaltet wird, bleibt der Inhalt der Speicher in dem Stapel unverändert, so dass die Regelung durch das zweite Geschwindigkeits-Sollwertsignal in den Speicher 4 geführt wird. Auch bei nochmaligem Betätigen der Wiederaufnahmetaste bleiben die Speicherinhalte des ersten und des zweiten Speichers 4 und 5 in dem Stapel unverändert, wenn nicht zuvor das Geschwindigkeits-Istwertsignal das Geschwindigkeits-Sollwertsignal erreicht hat. Dieser Zustand wird durch einen ebenfalls unterbrochen dargestellten Leitungszug 25 zu der Steueranordnung signalisiert. Erst nachdem die Fahrzeuggeschwindigkeit der nach Massgabe des zweiten Geschwindigkeits-Sollwertsignals vorbestimmten Geschwindigkeit entspricht, kann durch erneute Betätigung der Wiederaufnahmetaste 18 das erste Geschwindigkeits-Sollwertsignal in den ersten Speicher geschoben werden und so für die Einregelung der Reisegeschwindigkeit wirksam werden.

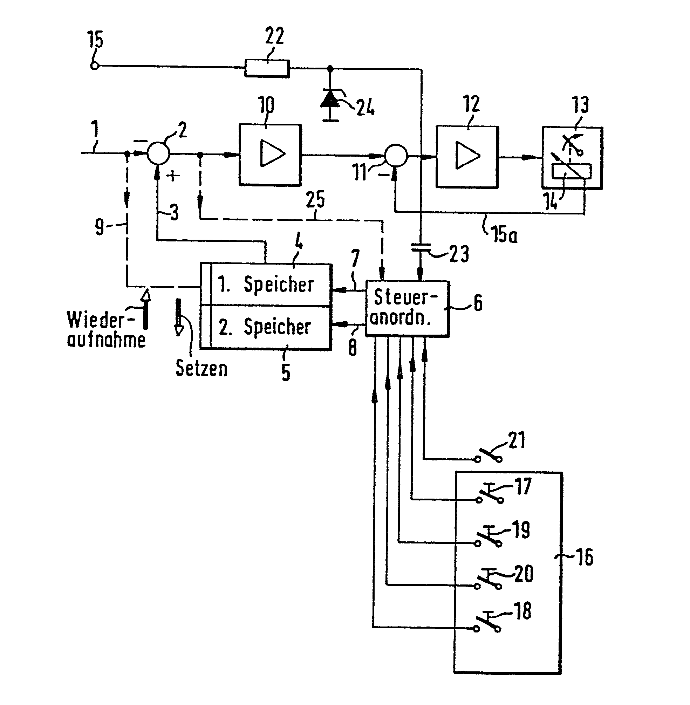

Es wird noch bemerkt, dass in der Zeichnung sämtliche dargestellten Elemente mit Ausnahme des Stellglieds 13, des Stellungsmelders 14, der Rückführungsleitung 15a, der Klemme 15, des Bediengeräts 16 mit zugehörigen Tasten und Kontakten und des Bremslichtkontakts 21 zusammen als Regler bezeichnet sind.

## Patentansprüche

1. Einrichtung zur Regelung der Geschwindigkeit eines Fahrzeugs, insbesondere eines Kraftfahrzeugs, mit einem elektronischen Regler, der zumindest einen ersten Speicher (4) zur Speicherung eines ersten Geschwindigkeits-Sollwertsignals sowie eine Steueranordnung (16) für den Speicher (4) aufweist und in dem ein Geschwindigkeits-Istwertsignal mit dem Geschwindigkeits-Sollwertsignal verglichen und ein entsprechendes Stellsignal erzeugt wird, sowie mit einem mit dem Regler in Verbindung stehenden Bediengerät (16), das mindestens eine Taste (19 bzw. 20) zum Setzen des Speichers (4) auf das Geschwindigkeits-Sollwertsignal, eine Taste (17) zum Ausschalten der Regelung, sowie eine Wiederaufnahmetaste (18) zum erneuten Aktivieren der Regelung umfasst, dadurch gekennzeichnet, dass in dem Regler ein zweiter Speicher (5) zur Speicherung eines zweiten Geschwindigkeits-Sollwertsignals vorgesehen ist, der mit dem ersten Speicher (4) in einem durch die Steueranordnung (16) steuerbaren Stapel (4, 5) in Verbindung steht.

2. Verfahren zur Regelung der Geschwindigkeit eines Fahrzeugs durch eine Einrichtung nach Anspruch 1, dadurch gekennzeichnet, dass jeweils bei Betätigen der Taste (19 bzw. 20) zum Setzen das aktuelle Geschwindigkeitssignal in dem ersten Speicher (4) als Geschwindigkeits-Sollwertsignal einspeicherbar ist, nachdem ein gegebenenfalls zuvor in dem ersten Speicher gespeichertes Geschwindigkeits-Sollwertsignal in den zweiten Speicher (5) übertragen ist, und dass durch Betätigung der Wiederaufnahmetaste (18) das in dem zweiten Speicher (5) enthaltende Geschwindigkeits-Sollwertsignal in den ersten Speicher (4) zur Regelung übertragbar ist.

3. Einrichtung nach Anspruch 1, gekennzeichnet durch Mittel zum Duplizieren des Geschwindigkeits-Sollwertsignals in dem zweiten Speicher bei Betätigung der Wiederaufnahmetaste (18).

4. Einrichtung nach Anspruch 1, dadurch gekennzeichnet durch Mittel zum Speichern des gleichen aktuellen Geschwindigkeits-Sollwertsignals in dem ersten (4) und in dem zweiten Speicher (5) beim ersten Betätigen der Taste (19 bzw. 20) zum Setzen nach Einschalten der Zündung (Klemme 15).

5. Verfahren nach Anspruch 2 gekennzeichnet, dass nach Betätigen der Taste (17) zum Umschalten bei Betätigung der Wiederaufnahmetaste (18) das zuletzt in dem ersten Speicher (4) stehende Geschwindigkeits-Sollwertsignal zur Regelung aktiviert wird und kein Geschwindigkeits-Sollwertsignal zwischen dem ersten (4) und dem zweiten Speicher (5) übertragbar ist.

## Claims

1. Device for controlling the speed of a vehicle, especially a motor vehicle, with an electronic controller which comprises at least a first store (4) for storing a first desired speed value signal and also a control arrangement (16) for the store (4), and in which an actual speed value signal is compared with the desired speed value signal and a corresponding regulating signal is produced, also with an operating unit (16) which is connected to the controller and which has at least one key (19 or 20) for setting the store (4) to the desired speed value signal, a key (17) for switching-off the control and also a resumption key (18) for re-activating the control, characterised in that a second store (5) for storing a second desired speed value signal is provided in the controller and is connected to the first store (4) in a stack (4, 5) controllable by the control arrangement (16).

2. Method of controlling the speed of a vehicle by a device according to claim 1, characterised in that each time the key (19 or 20) for setting is operated the actual speed signal is adapted to be put into the first store (4) as a desired speed value signal, after a desired speed value signal possibly previously stored in the first store is transferred to the second store (5), and that by operation of the resumption key (18) the desired speed value signal contained in the second store (5) is transferable to the first store (4) for control purposes.

3. Device according to claim 1, characterised by means for duplicating the desired speed value signal in the second store when the resumption key (18) is operated.

4. Device according to claim 1, characterised by means for storing the same current desired speed value signal in the first store (4) and in the second store (5) at the first operation of the key (19 or 20) for setting after the ignition is switched on (terminal 15).

5. Method according to claim 2, characterised in that after operation of the key (17) for changing-over, when the resumption key (18) is operated, the desired speed value signal last present in the first store (4) is activated for control purposes, and no desired speed value signal can be transferred between the first store (4) and the second store (5).

## Revendications

1. Dispositif pour régler la vitesse d'un véhicule, en particulier d'un véhicule automobile, à l'aide d'un régulateur électronique comprenant au moins une première mémoire (4) pour mémoriser un premier signal de valeur de consigne de la vitesse, ainsi qu'un dispositif (6) de commande de cette mémoire (4), et dans lequel un signal de valeur réelle de la vitesse est comparé à un signal de valeur de consigne de cette vitesse et un signal de réglage correspondant est engendré, le dispositif comportant également un appareil de manœuvre (16) qui est en liaison avec le régulateur et renferme au moins une touche (19 ou 20, respectivement) pour ajuster la mémoire (4) en fonction du signal de valeur de consigne de la vitesse, une touche (17) pour annuler le réglage, ainsi qu'une touche de reprise (18) pour activer à nouveau ce réglage, dispositif caractérisé par le fait que le régulateur présente une seconde mémoire (5) qui est prévue pour mémoriser un second signal de valeur de consigne de la vitesse, et qui est en liaison avec la première mémoire (4), dans un étage regroupé (4, 5) pouvant être commandé par le dispositif de commande (6).

2. Procédé pour régler la vitesse d'un véhicule par l'intermédiaire d'un dispositif selon la revendication 1, procédé caractérisé par le fait que, lors de chaque actionnement de la touche (19 ou 20, respectivement) assurant l'ajustement, le signal de vitesse renfermé par la première mémoire (4) à l'instant considéré peut être mémorisé en tant que signal de valeur de consigne de la vitesse, après qu'un signal de valeur de consigne de la vitesse, éventuellement mémorisé au préalable dans la première mémoire, a été transmis à la seconde mémoire (5); et par le fait qu'un actionnement de la touche de reprise (18) permet de transmettre à la première mémoire (4), en vue du réglage, le signal de valeur de consigne de vitesse renfermé par la seconde mémoire (5).

3. Dispositif selon la revendication 1, caractérisé par le fait qu'il présente des moyens de duplication du signal de valeur de consigne de la vitesse dans la seconde mémoire de l'actionnement de la touche de reprise (18).

4. Dispositif selon la revendication 1, caractérisé par le fait qu'il présente des moyens pour mémoriser le même signal de valeur de consigne de la vitesse à l'instant considéré dans les première (4) et seconde (5) mémoires lors du premier actionnement de la touche d'ajustement (19 ou 20, respectivement), après l'enclenchement de l'allumage (borne 15).

5. Procédé selon la revendication 2, caractérisé par le fait que, après l'actionnement de la touche de commutation (17), lors de l'actionnement de la touche de reprise (18), le signal de valeur de consigne de la vitesse renfermé en dernier lieu par la première mémoire (4) est activé en vue du réglage, et aucun signal de valeur de consigne de la vitesse ne peut être transmis entre la première mémoire (4) et la seconde mémoire (5).